# EUROPEAN PATENT SPECIFICATION

(11) **EP 2 891 198 B1**
(45) Date of publication and mention of the grant of the patent: **24.10.2018**
(21) Application number: 13832286.2
(22) Date of filing: 29.08.2013
(51) Int. Cl.: H01M 2/10, F16F 15/10, B60R 16/04, B60L 11/18, F16F 15/073, F16F 1/26, F16F 15/00

(54) **FASTENING SYSTEM FOR A BATTERY IN A VEHICLE**
BEFESTIGUNGSSYSTEM FÜR EINE BATTERIE IN EINEM FAHRZEUG
SYSTÈME DE FIXATION D'UNE BATTERIE DANS UN VÉHICULE

(30) Priority: 30.08.2012 SE 1250962
(43) Date of publication of application: 08.07.2015
(73) Proprietor: Scania CV AB, 151 87 Södertälje (SE)
(72) Inventor: WENTZEL, Henrik, 113 33 Stockholm (SE); BENGTSSON, Per, 611 92 Nyköping (SE); WENTZEL, Henrik, SE-167 62 Bromma (SE)
(86) International application number: PCT/SE2013/051011
(87) International publication number: WO 2014/035326

(56) References cited:
- EP-A2- 1 088 694
- DE-U- 7 338 652
- GB-A- 1 476 927
- GB-A- 1 476 927
- GB-A- 2 015 951
- US-A- 1 459 973

## Description

### Technical field of the invention

The present invention concerns a system for fastening a battery in a vehicle according to the preamble to the independent claim.

### Background of the invention

A motor vehicle that is powered by a combustion engine normally uses an electric starter motor to start the combustion engine. The electric starter motor is normally powered by a chargeable starter battery. Such a starter battery powers the starter motor, headlights and the vehicle ignition system. The driver controls the initiation of the starter motor by activating the ignition switch in the vehicle, for example by turning the start key. The battery can be arranged in or in connection to the engine compartment of the vehicle.

Because the battery is normally arranged in connection to other components in the vehicle that vibrate, and because vehicles are often driven on roads or terrains that are uneven, there are heavy demands that the battery be anchored in a suitable manner, and that it remain securely in the same place throughout its entire service life.

In modern motor vehicles there is a problem in terms of fastening batteries in a suitable manner that ensures that the battery will remain securely disposed in the intended place. The reason for this is in part that the assumptions pertaining to securing a battery change during the service life of the battery. Relatively large tolerances have traditionally been applied in connection with battery fastening devices so that batteries of various dimensions can be used. In addition, an effect that is common once the battery has been used for a given time is that it will become compressed, primarily in height, with the result that the originally securely fastened battery no longer sits securely in place.

Examples of documents that describe known devices for fastening batteries in vehicles are provided below.

US 5 823 502 describes a fastening device for a vehicle battery. The device is a U-shaped tension band that presses against the top of the battery and comprises two legs that extend along two opposite sides of the battery. The U-shaped band comprises two fastening hooks, one at each end, which are hooked securely to a bowl that is arranged in the engine compartment of the vehicle.

US 6 161 810 describes a car battery arranged in a tray. The battery is held in place by means of a rotatable rod that is adapted so as to abut against the battery surface. The rotatable rod is kept in place by means of a latch so that it abuts against the battery surface.

US 2004 144 908 describes a fastening device that can secure vehicle batteries of different sizes. The device comprises a first and second bracket that can be inserted into one another telescopically, wherein the first bracket is adapted so as to abut against the top of the battery.

EP1088694A2 discloses a structure for installing an automotive battery in which the battery is mounted on a battery mounting base.

GB 1476 927 A relates to a battery assembly which allows a battery to move horizontally relatively a carrier.

As discussed above, a problem exists in that the battery or batteries of vehicles often no longer sit securely disposed after having been used for a given time. The object of the present invention is thus to ensure, by means of a fastening system, that batteries can also be securely disposed after having been used for a time, either automatically or by means of a simple adjustment of the fastening system.

### Summary of the invention

The aforesaid object is achieved by means of the invention defined by the independent claim.

Preferred embodiments are defined by the dependent claims.

According to one aspect, the invention concerns a fastening system for at least one battery in a vehicle. The fastening system comprises at least one elongated support bar with a first and a second end, and which presents a first and a second side, wherein the second side of the support bar is adapted so as to be disposed against the top of said battery. The fastening system further comprises at least one elongated sprung rail with a second length and a first and a second end, and presenting a first and a second side. The second length is greater than the first length. The sprung rail comprises a first and a second recession respectively disposed at the first and second end, wherein said first and second recess are adapted so as to receive fastening elements. The second side of the sprung rail is further adapted so as to be disposed against the first side of the support bar for the purpose of transferring a force from said sprung rail to said support bar in order to hold the battery securely in place. The support bar has, when viewed in its longitudinal direction, a U-shaped cross-section comprising two side parts and one intermediate part presenting a first and second side, wherein the sprung rail is adapted so as to be arranged in the U-shaped support bar.

This fastening system has the advantage that the battery sits securely disposed even after a period of time, as the force applied from the sprung rail to the support bar that secures the battery does not diminish over time. The support bar also contributes by distributing the pressure uniformly across the batteries.

This is an advantage because it is a simple and reliable means of disposing the sprung rail against the battery.

According to one embodiment of the invention, the sprung rail has an inner radius of curvature and an outer radius of curvature, where the inner radius of curvature is greater than the outer radius of curvature, so that the spring leaf is thicker in the middle than at the first and the second end.

The sprung rail thus has a curvature in its undeformed state. This enables the sprung rail to be highly deformed under tension, which is an advantage.

According to an alternative embodiment of the invention, the fastening system comprises two support bars that are adapted so as to be disposed against a top of said battery.

This is an advantageous embodiment of the invention that contributes to distributing the pressure on the top of the battery.

According to one embodiment of the invention, the fastening elements comprise a nut, a threaded rod, on which the nut is adapted so as to be disposed, and a washer, which is adapted so as to be disposed between the nut and the sprung rail.

This is an advantage in that it is an efficient fastening element. If the battery is not seated securely after a period of use, it can be easily corrected by tightening the nut.

According to one embodiment of the invention, the washer is a spherical washer.

This is an advantage in that a spherical washer can absorb angle errors. This can be appropriate because the sprung rail has a curvature.

According to one embodiment of the invention, the sprung rail is adapted so as to be arranged in the U-shaped support bar by means of two pins disposed against the first and second end of the support bar.

This is an advantage in that the sprung rail can be pre-mounted in the support bar. Installation is thereby facilitated by reducing the height of the space required for the sprung rail and also reducing the tightening time for the fastening elements without increasing their stiffness.

According to one alternative embodiment of the invention, the sprung rail is made of a steel with a yield point of 850 MPa.

It is an advantage to use a sprung rail with a high yield point, as the battery cannot tolerate being subjected to excessive clamping force.

According to an alternative embodiment of the invention, the support bar has a radius of curvature in its longitudinal direction, wherein the radius of curvature of the support bar is greater than the inner radius of curvature of the sprung rail.

This is an advantage in that the support bar is thus able to help to efficiently distribute the pressure over the top of the battery.

### Brief description of drawing

- Figure 1: shows an overview of a goods vehicle in the form of a truck,
- Figure 2: shows a side view of the fastening system,
- Figure 3: shows an overview of a fastening system for a battery,
- Figure 4: shows a detailed view of the fastening system securely arranged on a battery,
- Figure 5: shows an embodiment of the fastening system,
- Figure 6: shows an embodiment of the fastening system,
- Figure 7: shows an exploded diagram of an embodiment of the fastening system,
- Figure 8: shows a detailed view of the fastening system arranged on a battery,
- Figure 9: shows the sprung rail of the fastening system, and
- Figure 10: shows an embodiment of the support bar of the fastening system.

### Detailed description of preferred embodiments of the invention

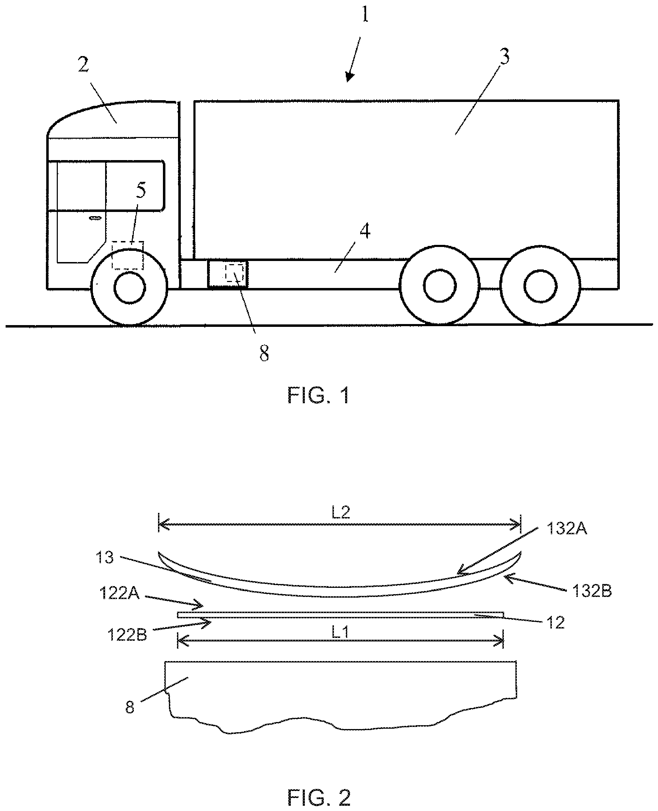

Figure 1 shows a goods vehicle 1 that is equipped with a cab 2 and a cargo space 3. The body of the goods vehicle 1 comprises longitudinal supporting beams 4. The goods vehicle 1 is powered by a schematically depicted combustion engine 5. The goods vehicle also comprises a battery 8.

Figure 2 shows a first embodiment of portions of the fastening system for the battery 8. The fastening system is viewed from the side in order to illustrate the length L1 of the support bar and its first and second sides 122A, 122B. The length L2 and first and second side 132A, 132B of the sprung rail are also shown. The length of the sprung rail L2 is greater than the length of the support bar L1.

The second side 122B of the support bar is adapted so as to be arranged against the top of the battery. And the second side 132B of the sprung rail is adapted so as to be arranged against the first side 122A of the support bar.

L1 is suitably 450 mm. L2 is suitably 500 mm. These values are only examples, and will be adapted based on the size of the battery.

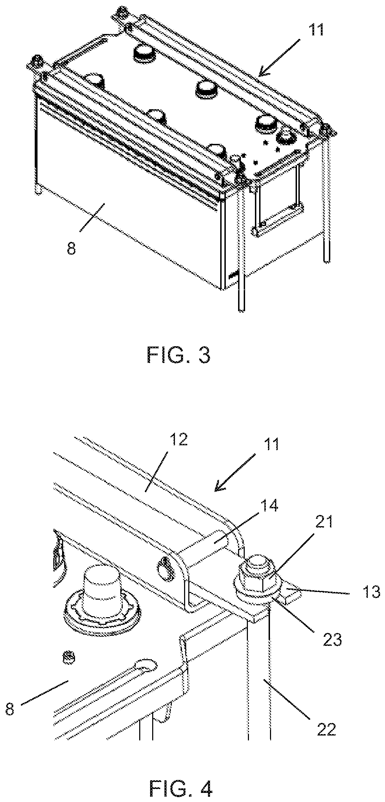

Figure 3 shows a second embodiment of the fastening system 11 arranged in connection to a battery 8 in order to hold it securely. Two support bars are suitably arranged in connection to the top of the battery.

Other embodiments can comprise just one support bar arranged in connection to the top of the battery. In additional other embodiments, three or more support bars can be arranged in connection to the top of the battery. The number of bars that it can be suitable to use is determined in part by the conformation of the top of the battery or the space that is available in connection with the battery.

Figure 4 shows a detailed view of the second embodiment of the fastening system 11 for holding the battery 8 securely. The fastening system comprises an elongated support bar 12, which is adapted so as to be arranged in abutment against a top of said battery 8. The fastening system also comprises an elongated sprung rail 13. The sprung rail 13 comprises a first and a second recess arranged on the respective first and second ends of the sprung rail. The recess is adapted so as to receive fastening elements 21, 22, 23. The figure also shows one of the two pins 14 that are arranged in respective ends of the support bar.

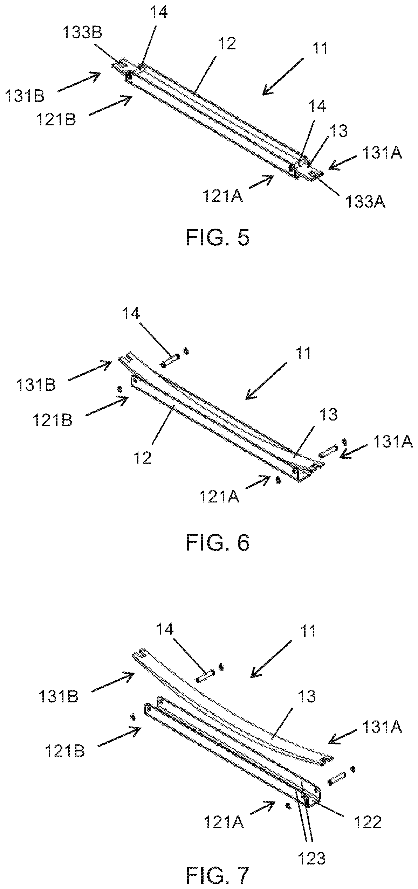

Figure 5 shows the second embodiment of the fastening system 11 with the support bar 12 and the sprung rail 13. The support bar 12 comprises a first and a second end 121A, 121B. The sprung rail 13 comprises a first and a second end 131A, 131B, and a first and a second recess 133A, 133B arranged at respective first and second ends 131A, 131B. Using the pins 14, the sprung rail 13 is pre-mounted under tension in the support bar 12. The fastening system can subsequently be arranged in connection to a battery by means of the fastening elements arranged in the recesses 133A, 133B.

Figure 6 shows the same embodiment of the fastening system 11 as does Figure 5. This figure shows the sprung rail 13 disposed in the U-shaped support bar 12 before the rail is arranged under tension in the support bar 12 by means of the pins 14.

Figure 7 shows the same embodiment of the fastening system 11 as do Figures 5 and 6. This figure shows the sprung rail 13 before it is disposed in the U-shaped support bar 12. It also shows that the U-shaped support bar comprises two opposing side parts 123 and an intermediate part 122, against which the sprung rail 13 is adapted so as to be arranged.

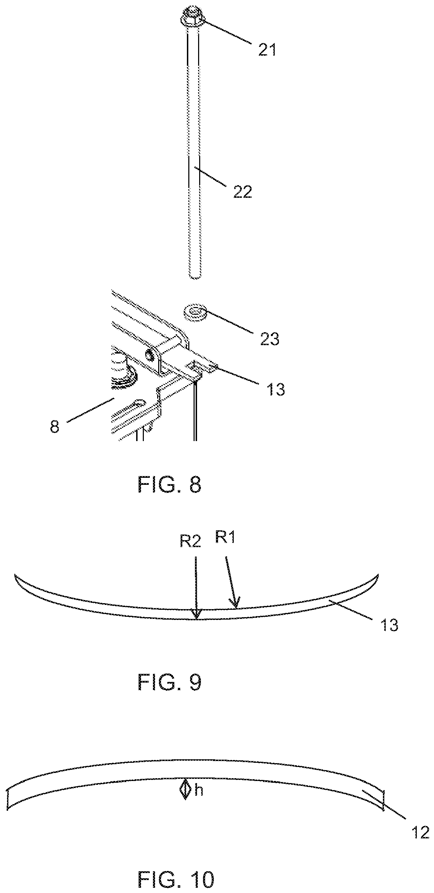

Figure 8 shows a detailed view of the second embodiment of the fastening system 11 for holding the battery 8 securely. The figure shows the fastening elements in the form of a nut 21, a threaded rod 22 and a washer 23 before they are arranged in the recess in the sprung rail 13. The washer 23 can be a spherical washer.

Figure 9 shows the sprung rail 13 with an inner radius of curvature R1 and an outer radius of curvature R2, where R1 > R2. The sprung rail 13 is suitably a spring leaf with a high yield point, such as 850 MPa. This is a suitable value for the yield point of the respective rail when two support bars are arranged in connection to the top of the battery, against which support bars the sprung rails are adapted so as to be arranged. The value of the yield point will be different if a different number of support bars are arranged in connection to the top of the battery.

Figure 10 shows yet another embodiment of the support bar 12. In this figure the support bar 12 has a certain flexure so as to distribute the pressure on the top of the battery more uniformly. The flexure shown in the figure is somewhat exaggerated; in reality h will equal several mm, for example 2 mm.

The outer radius of curvature R2 is suitably 900 mm in the undeformed state. The inner radius of curvature R1 is then suitably 950 mm in the undeformed state. These are only examples of radii of curvature, and must be adapted based on the prevailing conditions and on the number of support bars and sprung rails used. However, R1 is always greater than R2, with the result that the spring leaf is always thicker in the middle than at the ends. In the embodiment shown, the spring leaf suitably has a thickness of roughly 13 mm in the middle, and the thicknesses at its ends are then roughly 6 mm. Because the sprung rail 13 has a curvature, it occupies a relatively large space in height. In its undeformed state, the height of the sprung rail is greater than the height of the side parts 123 of the support bar. It is consequently appropriate to arrange the sprung rail 13 in the U-shaped support bar 12 by means of the two pins 14 under which the sprung rail 13 is moderately pre-tensioned. In this moderately pre-tensioned state, the height of the sprung rail will be less than the height of the side parts 123 of the support bar. The sprung rail 13 is subsequently fully pre-tensioned in connection with assembly on the production line by means of the fastening elements.

When the spring leaf is disposed in the U-shaped support bar, the pins 14 press the ends 131A, 131B of the sprung rail down against the first side 122A of the intermediate part. The sprung rail 13 and the support bar 12 are then securely arranged by tightening the nut 21. If the battery is subsequently compressed somewhat, it can still be securely disposed by means of the pre-tensioning of the sprung rail. This will thus occur automatically as a result of the properties of the rail. If the battery is subsequently further compressed, it may become necessary to further tighten the nuts 21 arranged in respective recesses 133A, 133B. This is, however, a simple adjustment that does not necessitate a dismantling of the fastening system.

The threaded rod 22 of the fastening element is adapted so as to be securely disposed in connection to the vehicle chassis or longitudinal supporting beams in the body.

As described above, the fastening system is adapted for a vehicle battery, which normally becomes compressed over time. The fastening system can also be adapted so as to fasten a different object that is disposed in a vibrating environment, wherein the object may come to be compressed over time so that the object acquires smaller dimensions.

The present invention is not limited to the preferred embodiments described above. Different alternatives, modifications and equivalents can be used. The foregoing embodiments are consequently not to be viewed as limitative of the protective scope of the invention, which is defined in the accompanying claims.

## Claims

1. A fastening system (11) for at least one battery (8) in a vehicle, which fastening system comprises
- at least one elongated support bar (12) with a first length (L1) and a first and a second end (121A, 121B), and presenting a first and a second side (122A, 122B), wherein the second side (122B) of the support bar is adapted so as to be arranged in abutment against a top of said battery (8), **characterized in that** the support bar (12) has, viewed in its longitudinal direction, a U-shaped cross-section comprising two side parts (123) and one intermediate part (122) presenting a first and a second side (122A, 122B) and that the system (11) further comprises;
- at least one elongated sprung rail (13) with a second length (L2) and a first and a second end (131A, 131B), and presenting a first and a second side (132A, 132B) wherein the sprung rail is adapted so as to be arranged in the U-shaped support bar (12),
- wherein the second length (L2) is greater than the first length (L1),
- wherein the sprung rail (13) comprises a first and a second recess (133A, 133B) arranged at respective first and second ends (131A, 131B), and wherein said first and second recesses (132A, 132B) are adapted so as to receive fastening elements , comprising a nut (21), a threaded rod (22), on which the nut is adapted so as to be arranged, and a washer (23), which is adapted so as to be arranged between the nut (21) and the sprung rail (13) and wherein the threaded rod (22) is adapted to be disposed in connection to a vehicle chassis or a longitudinal supporting beam and
- wherein the second side (132B) of the sprung rail is adapted so as to be arranged against the first side (122A) of the support bar in order to transfer a force from said sprung rail (13) to said support bar (12) in order to hold the battery (8) securely.

2. A fastening system according to claim 1, **characterized in that** the sprung rail (13) has an inner radius of curvature (R1) and an outer radius of curvature (R2), wherein the inner radius of curvature (R1) is greater than the outer radius of curvature (R2), so that the spring leaf is thicker in the middle than at the first and the second end (131A, 131B).

3. A system according to any of the preceding claims, **characterized in that** two support bars (12) are adapted so as to be arranged in abutment against a top of said battery (8).

4. A system according to claim 1, **characterized in that** the washer (23) is a spherical washer.

5. A system according to any of claims 2 to 4, **characterized in that** the sprung rail (13) is adapted so as to be arranged under pre-tension in the U-shaped support bar (12) by means of two pins (14) arranged in connection to the first and second ends (121A, 121B) of the support bar (12).

6. A system according to any of the preceding claims, **characterized in that** the sprung rail (13) is made of a steel with a yield point of 850 MPa.

7. A system according to any of the preceding claims, **characterized in that** the support bar (12) has a radius of curvature (R3) in its longitudinal direction, wherein the radius of curvature (R3) of the support bar is greater than the inner radius of curvature (R1) of the sprung rail.

## Patentansprüche

1. Befestigungssystem (11) für mindestens eine Batterie (8) in einem Fahrzeug, wobei das Befestigungssystem umfasst:
- mindestens eine längliche Stützstange (12) mit einer ersten Länge (L1) und einem ersten und einem zweiten Ende (121A, 121B), und umfassend eine erste und eine zweite Seite (122A, 122B), wobei die zweite Seite (122B) der Stützstange dazu eingerichtet ist, in Berührung mit der Oberseite der Batterie (8) angeordnet zu sein, **dadurch gekennzeichnet, dass** die Stützstange (12), betrachtet in ihrer Längsrichtung, einen U-förmigen Querschnitt aufweist, der zwei Seitenteile (123) und ein Mittelteil (122) umfasst, das eine erste und eine zweite Seite (122A, 122B) aufweist, und wobei das System (11) weiterhin umfasst;
- mindestens eine längliche Federschiene (13) mit einer zweiten Länge (L2) und einem ersten und einem zweiten Ende (131A, 131B), aufweisend eine erste und eine zweite Seite (132A, 132B), wobei die Federschiene dazu eingerichtet ist, in der U-förmigen Stützstange (12) angeordnet zu sein,
- wobei die zweite Länge (L2) größer ist als die erste Länge (L1),
- wobei die Federschiene (13) eine erste und eine zweite Aussparung (133A, 133B) umfasst, die jeweils entsprechend an ersten und zweiten Enden (131A, 131B) angeordnet sind, und wobei die erste und zweite Aussparung (132A, 132B) dazu eingerichtet sind, Befestigungselemente aufzunehmen, die eine Mutter (21), eine Gewindestange (22), auf welcher die Mutter eingerichtet ist, angeordnet zu sein, und eine Unterlegscheibe (23) aufzunehmen, die dazu eingerichtet ist, zwischen der Mutter (21) und der Federschiene (13) angeordnet zu sein, und wobei die Gewindestange (22) dazu eingerichtet ist, in Verbindung mit einem Fahrzeugchassis oder einem länglichen Stützträger angeordnet zu sein, und
- wobei die zweite Seite (122A) der Federschiene dazu eingerichtet ist, gegenüber der ersten Seite (122A) der Stützstange angeordnet zu sein, um eine Kraft von der Federschiene (13) zu der Stützstange (12) zu übertragen, um die Batterie (8) sicher zu halten.

2. Befestigungssystem nach Anspruch 1, **dadurch gekennzeichnet, dass** die Federschiene (13) einen inneren Krümmungsradius (R1) und einen äußeren Krümmungsradius (R2) aufweist, wobei der innere Krümmungsradius (R1) größer ist als der äußere Krümmungsradius (R2), wobei das Federblatt in der Mitte dicker ist als das erste und das zweite Ende (131A, 131B).

3. Befestigungssystem nach einem der vorhergehenden Ansprüche, **dadurch gekennzeichnet, dass** zwei Stützstangen (12) dazu eingerichtet sind, mit einer Oberseite der Batterie (8) in Berührung zu sein.

4. Befestigungssystem nach Anspruch 1, **dadurch gekennzeichnet, dass** die Unterlegscheibe (23) eine sphärische Unterlegscheibe ist.

5. Befestigungssystem nach einem der Ansprüche 2-4, **dadurch gekennzeichnet, dass** die Federschiene (13) dazu eingerichtet ist, unter Vorspannung in der U-förmigen Stützstange (12) angeordnet zu sein, indem zwei Bolzen (14) in Verbindung mit den ersten und zweiten Enden (121A, 121B) der Stützstange (12) angeordnet sind.

6. Befestigungssystem nach einem der vorhergehenden Ansprüche, **dadurch gekennzeichnet, dass** die Federschiene (13) aus Stahl mit einer Streckgrenze von 850 MPa hergestellt ist.

7. Befestigungssystem nach einem der vorhergehenden Ansprüche, **dadurch gekennzeichnet, dass** die Stützstange (12) einen Krümmungsradius (R3) in dessen Längsrichtung aufweist, wobei der Krümmungsradius (R3) der Stützstange größer ist als der innere Krümmungsradius (R1) der Federschiene.

## Revendications

1. Système de fixation (11) pour au moins une batterie (8) dans un véhicule, lequel système de fixation comprend
- au moins une barre de support allongée (12) ayant une première longueur (L1) et une première et une seconde extrémité (121A, 121B), et présentant un premier et un second côté (122A, 122B), le second côté (122B) de la barre de support étant adapté pour être disposé en butée contre une partie supérieure de ladite batterie (8), **caractérisé en ce que** la barre de support (12) présente, comme observé dans sa direction longitudinale, une coupe transversale en forme de U comportant deux parties latérales (123) et une partie intermédiaire (122) présentant un premier et un second côté (122A, 122B) et **en ce que** le système (11) comprend en outre ;
- au moins un rail à ressort allongé (13) ayant une seconde longueur (L2) et une première et une seconde extrémité (131A, 131B), et présentant un premier et un second côté (132A, 132B) dans lequel le rail à ressort est adapté pour être disposé dans la barre de support en forme de U (12),
- dans lequel la seconde longueur (L2) est supérieure à la première longueur (L1),
- dans lequel le rail à ressort (13) comprend un premier et un second évidement (133A, 133B) agencés au niveau de première et seconde extrémités respectives (131A, 131B), et dans lequel lesdits premier et second évidements (132A, 132B) sont adaptés pour recevoir des éléments de fixation, comprenant un écrou (21), une tige filetée (22), sur laquelle l'écrou est adapté pour être disposé, et une rondelle (23) qui est adaptée pour être disposée entre l'écrou (21) et le rail à ressort (13) et dans lequel la tige filetée (22) est adaptée pour être disposée en relation avec un châssis de véhicule ou une poutre de support longitudinale et
- dans lequel le second côté (132B) du rail à ressort est adapté pour à être disposé contre le premier côté (122A) de la barre de support afin de transférer une force depuis ledit rail à ressort (13) à ladite barre de support (12) afin de maintenir la batterie (8) de manière ferme.

2. Système de fixation selon la revendication 1, **caractérisé en ce que** le rail à ressort (13) a un rayon de courbure intérieur (R1) et un rayon de courbure extérieur (R2), le rayon de courbure intérieur (R1) étant supérieur au rayon de courbure extérieur (R2), de sorte que la lame de ressort est plus épaisse au milieu qu'à la première et à la seconde extrémité (131A, 131B).

3. Système selon l'une quelconque des revendications précédentes, **caractérisé en ce que** deux barres de support (12) sont adaptées pour être disposées en butée contre une partie supérieure de ladite batterie (8).

4. Système selon la revendication 1, **caractérisé en ce que** la rondelle (23) est une rondelle sphérique.

5. Système selon l'une quelconque des revendications 2 à 4, **caractérisé en ce que** le rail à ressort (13) est adapté pour être disposé sous pré-tension dans la barre de support en forme de U (12) au moyen de deux broches (14) agencées en relation avec les première et seconde extrémités (121A, 121B) de la barre de support (12).

6. Système selon l'une quelconque des revendications précédentes, **caractérisé en ce que** le rail à ressort (13) est constitué d'acier ayant une limite élastique de 850 MPa.

7. Système selon l'une quelconque des revendications précédentes, **caractérisé en ce que** la barre de support (12) a un rayon de courbure (R3) dans sa direction longitudinale, le rayon de courbure (R3) de la barre de support étant supérieur au rayon intérieur de courbure (R1) du rail à ressort.
